# EUROPEAN PATENT SPECIFICATION

(11) **EP 2 672 630 B1**
(45) Date of publication and mention of the grant of the patent: **04.10.2017**
(21) Application number: 12749716.2
(22) Date of filing: 27.02.2012
(51) Int. Cl.: H04B 1/40, H04W 88/08, H04B 1/00, H04W 88/10

(54) **RADIO FREQUENCY MODULE, DEVICE AND METHOD FOR RECEIVING AND SENDING RADIO FREQUENCY SIGNAL, AND BASE STATION SYSTEM**
RADIOFREQUENZMODUL, VORRICHTUNG UND VERFAHREN ZUM EMPFANGEN UND SENDEN VON FUNKRADIOFREQUENZSIGNALEN SOWIE BASISSTATIONSSYSTEM
MODULE RADIOFRÉQUENCE, DISPOSITIF ET PROCÉDÉ POUR RECEVOIR ET ENVOYER UN SIGNAL RADIOFRÉQUENCE, ET SYSTÈME DE STATIONS DE BASE

(30) Priority: 25.02.2011 CN 201110046909
(43) Date of publication of application: 11.12.2013
(73) Proprietor: Huawei Technologies Co., Ltd., Longgang District Shenzhen, Guangdong 518129 (CN)
(72) Inventor: LI, Tingzhao, Shenzhen Guangdong 518129 (CN)
(74) Representative: Thun, Clemens
(86) International application number: PCT/CN2012/071674
(87) International publication number: WO 2012/113353

(56) References cited:
- EP-A1- 1 309 103
- CN-A- 101 346 890
- CN-A- 101 507 128
- CN-A- 101 814 924
- CN-A- 102 111 176
- US-A1- 2009 207 082
- US-A1- 2010 022 197
- US-A1- 2011 014 949
- US-B1- 6 560 443

## Description

### TECHNICAL FIELD

The present invention relates to the field of communications technologies, and in particular, to a radio frequency module, a device and a method for receiving and sending a radio frequency signal, and a base station system.

### BACKGROUND

Among base station products, a radio frequency module has a function of receiving and sending a radio signal, capable of converting a radio signal into a wired signal, or converting a wired signal into a radio signal. The radio frequency module includes a single frequency band radio frequency module, a dual frequency band radio frequency module, and a multiple frequency band radio frequency module. As regards the dual frequency band radio frequency module and the multiple frequency band radio frequency module, generally the dual frequency band radio frequency function and the multiple frequency band radio frequency function are integrated on the same radio frequency module, so as to select the single frequency band function, the dual frequency band function, or the multiple frequency band function according to different scenarios.

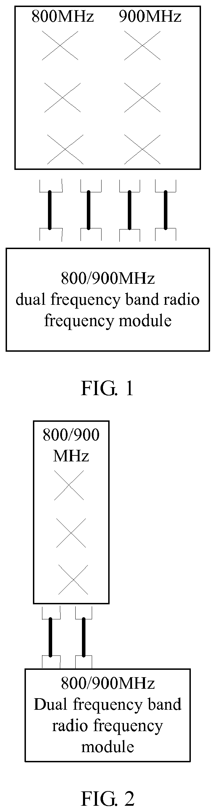

For example, an A+B dual frequency band radio frequency module may function as a single frequency band A radio frequency module, a single frequency band B radio frequency module, or a A+B dual frequency band radio frequency module, where, when functioning as a A+B dual frequency band radio frequency module, the A+B dual frequency band radio frequency module may include two antenna interfaces or four antenna interfaces. Specifically, the A+B dual frequency band radio frequency module has the following two design solutions: For the first design solution, the A+B dual frequency band radio frequency module is provided with four antenna interfaces, that is, frequency band A and frequency band B corresponds to respective antenna interfaces respectively, each frequency band being corresponding to two antenna interfaces. For example, as in FIG. 1, for an 800/900 MHz dual frequency band radio frequency module, the left two antenna interfaces are connected to 800 MHz antennas through feeders, and the right two antenna interfaces are connected to 900 MHz antennas through feeders. For the second solution, the A+B dual frequency band radio frequency module is provided with only two antenna interfaces, where frequency band A and frequency band B are combined inside the A+B dual frequency band radio frequency module, with the combined frequency band transmitted through the two antenna interfaces. For example, as in FIG. 2, the 800 MHz frequency band radio frequency signal and the 900 MHz frequency band radio frequency signal are combined inside the 800/900 MHz dual frequency band radio frequency module, and then transmitted to an 800/900 MHz antenna through two antenna interfaces and feeders as shown in FIG. 2.

During the foregoing process, the prior art has at least the following disadvantages: As regards configured dual frequency band radio frequency module or multiple frequency band radio frequency module, the mode of receiving and sending a radio frequency signal thereof cannot be changed. For example, in the A+B dual frequency band radio frequency module, the A+B dual frequency band radio frequency module is configured in such a manner that: after the combined signal of frequency band A and frequency band B radio frequency signals is received or sent, the A+B dual frequency band radio frequency module cannot receive or send an frequency band A radio frequency signal or a frequency band B radio frequency signal separately in use. For another example, the A+B dual frequency band radio frequency module is configured in such a manner that: after the frequency band A radio frequency signal or the frequency band B radio frequency signal is received or sent separately, the A+B dual frequency band radio frequency module cannot receive or send the combined signal of frequency band A and frequency band B radio frequency signals in use.

US 2010/0022197 A1 (Kato etc al.) discloses a portable wireless communication apparatus with antenna elements. A switch is changed to select either a DTV low-band frequency signal or a DTV high-band frequency signal, and output the selected signals to a DTV tuner. A tuner controller controls the switch to select the DTV high-band frequency signal by using the antenna element for transmission from the mobile phone signal processing unit. EP 1 309 103 A1 (Väisänen et al.) discloses an antenna system for GSM / WLAN radio operation comprising two antennas and capable of operating at least two different radio communication systems, wherein one radio communication system operates on one single antenna of the antenna system and another radio communication system operates on both antennas of the antenna system, wherein the antenna system serves as a diversity antenna system. US 2011/0014949 A1 (Shogo et al.) discloses a card device including a first antenna that is used for a signal transmission and reception; an antenna terminal that is connected with a second antenna that is provided in the outside of the card device; and a switch that connects in a switching manner one of the first antenna and an antenna terminal to the transmission and reception circuit. US 2009/0207082 A1 (Shankara et al) discloses a wireless device comprising a plurality of antennas that may be utilized during a communication, wherein the mobile device may switch among antennas to enable utilizing best path for transmitted and/or received radio frequency signals. The mobile device may also perform signal combining of radio frequency signals received via the plurality of antennas into enable receiving end to perform signal combining of radio frequency signals. US 6,560,443 B1 (Vaisanen et al.) discloses antenna switching circuitry in a multi-transceiver mobile terminal, which features a first switching unit which controllably couples a first transceiver port to either a first antenna port or a second antenna port and a second switching unit which controllably couples the second antenna port to either the first transceiver port to the first switching unit or to an input/output port of a second transceiver.

### SUMMARY

The present invention provides a radio frequency module, a device and a method for receiving and sending a radio frequency signal, and a base station system, capable of supporting flexible change of the mode of receiving and sending a radio frequency signal.

In one aspect, the present invention provides a radio frequency module:
The radio frequency module includes a first frequency band sub-module and a second frequency band sub-module. The first frequency band sub-module is connected with a first signal line, and an end of the first signal line is provided with a first antenna interface. The second frequency band sub-module is connected with a second signal line, and a third signal line is connected between the first signal line and the second signal line. A first change-over switch is arranged on the joint of the second signal line and the third signal line. The first change-over switch is provided with a first port, a second port, and a third port. The first port is connected with an output line, and the end of the output line is provided with a second antenna interface. The second port is connected to the second signal line, and the third port is connected to the third signal line. The second port is capable of being changed over between a connection to the first port and a connection to the third port.
When the second port is connected to the first port, the radio frequency module is configured to output only the radio frequency signal of the first frequency band sub-module from the first antenna interface, or to output only the radio frequency signal of the second frequency band sub-module from the second antenna interface, or to output the radio frequency signal of the first frequency band sub-module from the first antenna interface and the radio frequency signal of the second frequency band sub-module from the second antenna interface; or
when the second port is connected to the third port, the radio frequency module is configured to output a combined signal from the first antenna interface, wherein the combined signal is a combination of the radio frequency signal of the first frequency band sub-module and the radio frequency signal of the second frequency band sub-module.

In another aspect, the present invention provides a device for receiving and sending a radio frequency signal, including:
the foregoing radio frequency module and an antenna module, where the antenna module is connected to the radio frequency module through a first antenna interface and/or a second antenna interface in the radio frequency module.

In still another aspect, the present invention provides a method for receiving and sending a radio frequency signal, where the foregoing radio frequency module is utilized to receive or send a radio frequency signal. The method includes:
changing over a second port from a connection to a third port to a connection to a first port to make a second signal line disconnected from a third signal line and connected to an output line, thereby implementing sending a first frequency band radio frequency signal through a first antenna interface, and/or sending a second frequency band radio frequency signal through a second antenna interface; or
changing over the second port from the first port to the third port to make the second signal line disconnected from the output line and connected to the third signal line, implementing sending a combined signal of the first frequency band radio frequency signal and the second frequency band radio frequency signal.

In yet another aspect, the present invention provides a base station system, including the foregoing device for receiving and sending a radio frequency signal.

As regards the radio frequency module, the device and method for receiving and sending a radio frequency signal, and the base station system provided by the present invention, the first port of the first change-over switch is connected with the output line, the second port is connected with the second signal line, the third port is connected with the third signal line, and the second port is capable of being changed over between a connection to the first port and a connection to the third port. Hence, when the second port is connected to the third port, the second signal line may communicate with the third signal line, and the second signal line is disconnected from the output line. In this case, both ends of the third signal line are respectively connected with the first signal line and the second signal line, capable of implementing combination of the radio frequency signal of the first frequency band sub-module and the radio frequency signal of the second frequency band sub-module and output of the combined signal from the first antenna interface. When the second port changes over to the first port, the second signal line may communicate with the output line, and the third signal line is disconnected from the second signal line. This implements that only the radio frequency signal of the first frequency band sub-module is output from the first antenna interface or only the radio frequency signal of the second frequency band sub-module is output from the second antenna interface, or the radio frequency signal of the first frequency band sub-module is output from the first antenna interface and the radio frequency signal of the second frequency band sub-module is output from the second antenna interface. Hence, the mode of receiving and sending a radio frequency signal may be changed flexibly.

### BRIEF DESCRIPTION OF DRAWINGS

FIG. 1 is a schematic diagram of a dual frequency band radio frequency module in the mode of separately receiving and sending radio frequency signals of various frequency bands in the prior art;
FIG. 2 is a schematic diagram of a dual frequency band radio frequency module in the mode of separately receiving and sending a combined signal of radio frequency signals of various frequency bands in the prior art;
FIG. 3 is a schematic structural diagram of a radio frequency module according to an embodiment of the present invention;
FIG. 4a is a schematic view of a specific instance of a radio frequency module shown in FIG. 3, where a third signal line is disconnected from an output line;
FIG. 4b is a schematic view of a specific instance of a radio frequency module shown in FIG. 3, where a third signal line is disconnected from a second signal line;
FIG. 5 is an improved schematic diagram of a radio frequency module as shown in FIG. 3;
FIG. 6 is another improved schematic diagram of a radio frequency module as shown in FIG. 3;
FIG. 7 is a schematic diagram of a third signal line being disconnected from both a first signal line and a second signal line on a radio frequency module as shown in FIG. 6;
FIG. 8a is a schematic diagram of change-over switches being set inside a radio frequency connector according to an embodiment of the present invention;
FIG. 8b is a schematic diagram of change-over switches being set outside a radio frequency connector according to an embodiment of the present invention;
FIG. 9 is another schematic structural diagram of a radio frequency module according to an embodiment of the present invention;
FIG. 10 is a schematic diagram of a transformed solution according to an embodiment as shown in FIG. 9;
FIG. 11 is a schematic diagram of a device for receiving and sending a radio frequency signal according to an embodiment of the present invention;
FIG. 12a is a schematic diagram of a device for receiving and sending a radio frequency signal, where the device is for receiving and sending a combined radio frequency signal of a first frequency band and a second frequency band radio frequency signals according to an embodiment of the present invention;
FIG. 12b is a schematic diagram of a device for receiving and sending a radio frequency signal, where the device is for receiving and sending a first frequency band radio frequency signal according to an embodiment of the present invention;
FIG. 12c is a schematic diagram of a device for receiving and sending a radio frequency signal, where the device is for receiving and sending a second frequency band radio frequency signal according to an embodiment of the present invention;
FIG. 12d is a schematic diagram of a device for receiving and sending a radio frequency signal, where the device is for separately receiving and sending a first frequency band radio frequency signal and a second frequency band radio frequency signal according to an embodiment of the present invention; and
FIG. 13 is a schematic diagram of a method for receiving and sending a radio frequency signal according to an embodiment of the present invention;

**Reference signs:**

| | | |
|---|---|---|
| 1-First frequency band sub-module | 2-Second frequency band sub-module | 3-Third frequency band sub-module |
| 11-First signal line | 21-Second signal line | 31-Third signal line |
| 41-Output line | 51-Fourth signal line | 61-Fifth signal line |
| 71-First output line | 20-First change-over switch | 10-Second change-over switch |
| 30-Third change-over switch | 40-Fourth change-over switch | 211-First port |
| 212-Second port | 213-Third port | 111-First antenna interface |
| 222-Second antenna interface | 333-Third antenna interface | 101-Fourth port |
| 102-Fifth port | 12-First radio frequency connector | 22-Second radio frequency connector |
| 311-Sixth port | 312-Seventh port | 313-Eighth port |
| 401-Ninth port | 402-Tenth port | 1101-Radio frequency module |
| 1102-Antenna module | 11021-First antenna module | 11022-Second antenna module |
| 11023-Third antenna module | 11024-Frequency-combined | |
| | antenna module | |

### DESCRIPTION OF EMBODIMENTS

The following describes in detail a radio frequency module, a device and a method for receiving and sending a radio frequency signal in the embodiments of the present invention with reference to the accompany drawings.

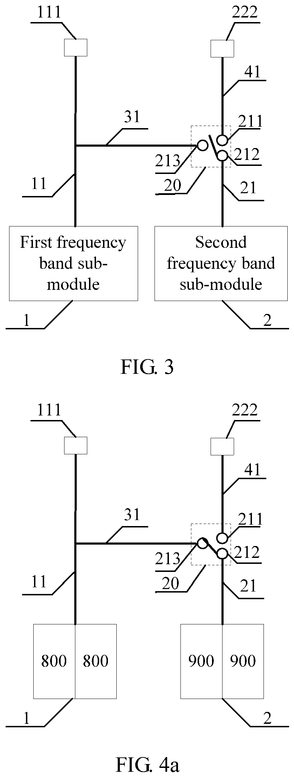

FIG. 3 shows a specific embodiment of a radio frequency module of the present invention. In this embodiment, the radio frequency module includes a first frequency band sub-module 1 and a second frequency band sub-module 2. The first frequency band sub-module 1 is connected with a first signal line 11, and an end of the first signal line 11 is provided with a first antenna interface 111. The second frequency band sub-module 2 is connected with a second signal line 21, and a third signal line 31 is connected between the first signal line 11 and the second signal line 21. A first change-over switch 20 is arranged on the joint of the second signal line 21 and the third signal line 31. The first change-over switch 20 is provided with a first port 211, a second port 212, and a third port 213. The first port 211 is connected with an output line 41, and the end of the output line 41 is provided with a second antenna interface 222. The second port 212 is connected with the second signal line 21, and the third port 213 is connected with the third signal line 31. The second port 212 can change over between the connections with the first port 211 and the third port 213.

In the radio frequency module provided by the embodiment of the present invention, because the first change-over switch 20 has the first port 211 connected with the output line 41, the second port 212 connected with the second signal line 21, and the third port 213 connected with the third signal line 31, and the second port 212 can change over between the connections with the first port 211 and the third port 213, when the second port 212 is connected to the third port 213, the second signal line 21 may communicate with the third signal line 31, and the second signal line 21 is disconnected from the output line 41. In this case, both ends of the third signal line 31 are respectively connected with the first signal line 11 and the second signal line 21, capable of implementing combination of the radio frequency signal of the first frequency band sub-module 1 and the radio frequency signal of the second frequency band sub-module 2, and output of the combined signal from the first antenna interface 111. When the second port 212 changes over to the first port 211, the second signal line 21 may communicate with the output line 41, and the third
signal line 31 is disconnected from the second signal line 21, capable of implementing that only the radio frequency signal of the first frequency band sub-module 1 is output from the first antenna interface 111, or only the radio frequency signal of the second frequency band sub-module 2 is output from the second antenna interface 222, or the radio frequency signal of the first frequency band sub-module 1 is output from the first antenna interface 111 and the radio frequency signal of the second frequency band sub-module 2 from the second antenna interface 222. Hence, the mode of receiving and sending a radio frequency signal may be changed flexibly.

As regards the combination of the radio frequency signal of the first frequency band sub-module 1 and the radio frequency signal of the second frequency band sub-module 2, the second signal line 21 may communicate with the third signal line 31, and the radio frequency signal of the second frequency band sub-module 2 is transmitted to the first signal line 11 by means of the third signal line 31, that is, combining the radio frequency signal originally existing on the first signal line 11 with the transmitted radio frequency signal of the second frequency band sub-module 2. Radio frequency signal "combination" mentioned hereinafter all equals to the radio frequency signal combination herein.

It should be noted that the first frequency band sub-module and the second frequency band sub-module are not subject to sequence, and the same applies to the first signal line, the second signal line, and third signal line; the first port, the second port, and the third port; or the first antenna interface and the second antenna interface, only for distinguishing two matters of the same type.

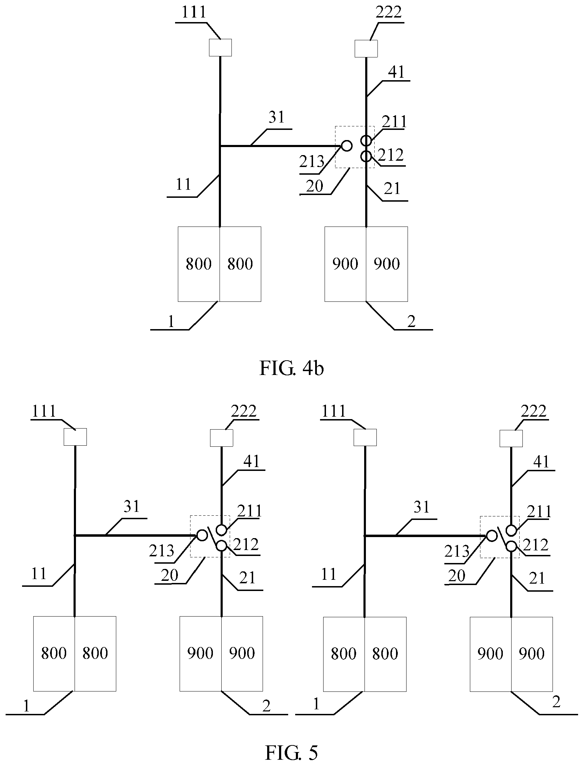

The following uses an 800/900 MHz dual frequency band radio frequency module as an example to illustrate the structure and function of the radio frequency module. The first frequency band sub-module 1 may be selected as the 800 MHz frequency band sub-module, and the second frequency band sub-module 2 may be selected as the 900 MHz frequency band sub-module. It should be understood that, besides selection of the 800 MHz frequency band and the 900 MHz frequency band, the two frequency bands of the first frequency band sub-module and the second frequency band sub-module may also select other corresponding frequency bands according to actual needs, such as an 1800 MHz frequency band or a 1900 MHz frequency band. In the following instances of FIG. 4a and FIG. 4b, the 800 MHz frequency band and the 900 MHz frequency band are selected only for convenience of description.

As shown in FIG. 4a, the 800 MHz frequency band sub-module 1 is connected with the first signal line 11, the 900 MHz frequency band sub-module 2 is connected with the second signal line 21, and the third signal line 31 is connected between the first signal line 11 and the second signal line 21. The first change-over switch 20 is arranged on the joint of the second signal line 21 and the third signal line 31, and the first change-over switch 20 has the first port 211 connected with the output line 41, the second port 212 connected with the second signal line 21, and the third port 213 connected with the third signal line 31. When the second port 212 is pulled, it may change over between the connection of the second port 212 and the first port 211 and the connection of the second port 212 and the third port 213.

As shown in FIG. 4a, when the second port 212 is connected to the third port 213, the second signal line 21 communicates with the third signal line 31, and the second signal line is disconnected from the output line 41. In this case, both ends of the third signal line 31 are respectively connected with the first signal line 11 and the second signal line 21. The 800 MHz frequency band radio frequency signal and the 900 MHz frequency band radio frequency signal are combined and output from the first antenna interface 111. As shown in FIG. 4b, when the second port 212 changes over to the first port 211, the second signal line 21 may communicate with the output line 41, and the third signal line 31 is disconnected from the second signal line 21. In this case, there are three signal output modes, respectively being that only the 800 MHz frequency band radio frequency signal is output from the first antenna interface 111 (the second antenna interface 222 has no output in this case), only the 900 MHz frequency band radio frequency signal is output from the second antenna interface 222 (the first antenna interface 111 has no output in this case), or the 800 MHz frequency band radio frequency signal and the 900 MHz frequency band radio frequency signal are respectively output from the first antenna interface 111 and the second antenna interface 222.

It should be noted that, the 800 MHz frequency band sub-module as shown in FIG. 4a and FIG. 4b is schematically represented as two 800 MHz filters. One 800 MHz filter functions as a receiving filter, the other 800 MHz filter functions as a sending filter, and the two filters form a duplexer for receiving and sending the 800 MHz frequency band radio frequency signal. In the same way, the two 900 MHz filters in FIG. 4a and FIG. 5a form a duplexer for receiving and sending the 900 MHz frequency band radio frequency signal. Similarly, in FIG. 5 to FIG. 10 involved hereinafter, each frequency band sub-module is represented in a similar way.

It can be known from the foregoing descriptions that, when the second port 212 is connected to the third port 213, the 800 MHz frequency band radio frequency signal and the 900 MHz frequency band radio frequency signal are combined and output from the first antenna interface 111. In this case, only the first antenna interface 111 of the radio frequency module as shown in FIG. 4a functions. When the second port 212 changes over from the connection with the third port 213 to the connection with the first port 211, there are three signal output modes, respectively being that only the 800 MHz frequency band radio frequency signal is output from the first antenna interface 111, only the 900 MHz frequency band radio frequency signal is output from the second antenna interface 222, or the 800 MHz frequency band radio frequency signal and the 900 MHz frequency band radio frequency signal are respectively output from the first antenna interface 111 and the second antenna interface 222. In this case, both the first antenna interface 111 and the second antenna interface 222 of the radio frequency module as shown in FIG. 4b function. In view of the above, as shown in FIG. 5, when the radio frequency module includes two 800 MHz frequency band sub-modules 1 and two 900 MHz frequency band sub-modules 2, and the second port and third port of each change-over switch 20 are connected, the first antenna interface 111 and the third antenna interface 111, counted from left to right on FIG. 5, function. When the first port and second port of each change-over switch 20 are connected, the first and third antenna interfaces 111 and the second and the fourth antenna interfaces 222, counted from left to right on FIG. 5, all function. For a scenario which requires to first receive and send the combined signal of the 800 MHz radio frequency signal and the 900 MHz radio frequency signal, and then receive and send the 800 MHz radio frequency signal and the 900 MHz radio frequency signal separately; or a scenario which requires to first receive and send the 800 MHz radio frequency signal and the 900 MHz radio frequency signal separately, and then receive and send the combined signal of the 800 MHz radio frequency signal and the 900 MHz radio frequency signal, or another scenario which requires to change the mode of receiving and sending a radio frequency signal. In this embodiment, the mode of receiving and sending a radio frequency signal may be changed flexibly by only changing over the second port 212 of the change-over switch 20 between the connections with the first port 211 and the third port 213.

It can be known from FIG. 4b that, when the third signal line 31 is disconnected from the second signal line 21, the third signal line 31 forms an open-circuit line connected with the first signal line 11. Since in the radio frequency application field, where an open-circuit line will become a load for the radio frequency module, and the load will cause the 800 MHz frequency band sub-module 1 to generate a severe impact on the receiving and sending of a radio frequency signal. For example, the open-circuit line may become an antenna located inside the radio frequency module, thereby sending interfering signals to other circuit modules inside the radio frequency module; or receiving interfering signals from other circuit modules; even converting the open-circuit status of the open-circuit line into the short-circuit status when the length of the open-circuit line is within a certain range, thereby inflicting more impact and damage on the radio frequency module. For example, when the length of the open-circuit line is 1/4 of the wavelength λ of the 800 MHz frequency band radio frequency signal, the open-circuit status of the open-circuit line will become the short-circuit status. Therefore, for the prevention of the open-circuit line of the first signal line 11 turning from the open-circuit status into the short-circuit status, the length of the third signal line 31 may be set to a length which has a specific relationship with the wavelength of the 800 MHz frequency band radio frequency signal, such as an integral multiple of λ/2. It should be noted that, in other embodiments of the present invention, the length of the third signal line 31 may be set to a length which has a specific relationship with the wavelength of the radio frequency signal of the first frequency band sub-module 1, such as an integral multiple of 1/2 wavelength.

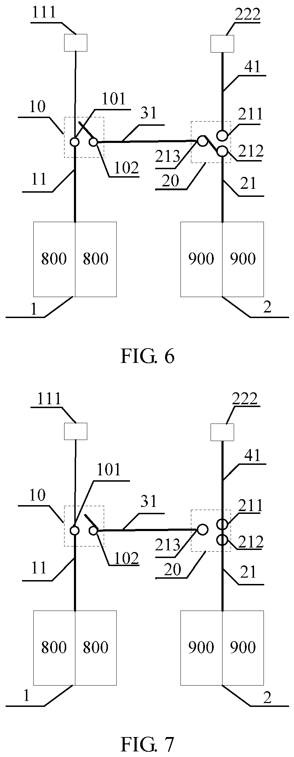

It can be known from the foregoing descriptions that when the first signal line 11 is connected with an open-circuit line (this open-circuit line is the third signal line 31 disconnected from the second signal line 21), the open-circuit line will cause the 800 MHz frequency band sub-module 1 to generate a severe impact on the receiving and sending of a radio frequency signal. Therefore, as shown in FIG. 6, a second change-over switch 10 may be arranged on the joint of the first signal line 11 and the third signal line 31 based on the radio frequency module. The second change-over switch 10 includes a fourth port 101 and a fifth port 102, where the fourth port 101 is connected with the first signal line 11, the fifth port 102 is connected with the third signal line 31, and the second change-over switch 10 and the first change-over switch 20 may be linked switches. The second change-over switch 10 may control the first signal line 11 and the third signal line 31 to be connected with or disconnected from each other. When the first change-over switch 20 has the first port 212 connected to the third port 213, the third signal line 31 is connected with the second signal line 21, meanwhile the second change-over switch 10 may be linked to the first change-over switch 20 to connect the third signal line 31 with the first signal line 11; when the first change-over switch 20 has the second port 212 connected to the first port 211, the third signal line 31 is disconnected from the second signal line 21, meanwhile the second change-over switch 10 may be linked to the first change-over switch 20 to disconnect the third signal line 31 from the first signal line 11. Therefore, when the first change-over switch 20 has the second port 212 connected to the third port 213, both ends of the third signal line 31 are respectively connected with the first signal line 11 and the second signal line 21, and the radio frequency signals of the 800 MHz and 900 MHz frequency bands are combined and output from the first antenna interface 111. As shown in FIG. 7, when the first change-over switch 20 has the second port 212 connected to the first port 211, the third signal line 31 is disconnected from both the first signal line 11 and the second signal line 21. In this case, there are three signal output modes, respectively being that only the 800 MHz radio frequency signal is output from the first antenna interface 111 (the second antenna interface 222 has no output in this case), only the 900 MHz radio frequency signal is output from the second antenna interface (the first antenna interface 111 has no output in this case), or the 800 MHz radio frequency signal and the 900 MHz radio frequency signal are respectively output from the first antenna interface 111 and the second antenna interface 222. It can be known from FIG. 7 that the third signal line 31, connected with neither the first signal line 11 nor the second signal line 21, does not become the open-circuit line of the first signal line 11 or the second signal line 21, so that the radio frequency module does not have an open-circuit line load, thereby generating no impact on signal receiving and sending of any one of the 800 MHz frequency band and the 900 MHz frequency band.

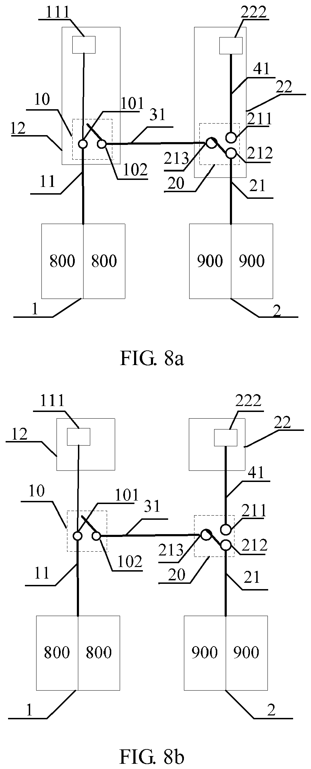

Change-over switches (including the first change-over switch 20 and the second change-over switch 10) used in the embodiments of the present invention may be mechanical switches. It can be known from the foregoing descriptions that an antenna interface may connect a radio frequency module to an external device (such as antenna module 1102) through a feeder (the feeder refers to the transmission cable between the radio frequency module and the external device, not shown in the figure). In practical use, a radio frequency connector may be used to implement the function of an antenna interface. In the embodiments of the present invention, change-over switches are needed to implement connection or disconnection between feeders connecting antenna interfaces and corresponding signal lines (for example, as shown in FIG. 8a, the feeder connecting the second antenna interface 222 may be connected with the output line 41 through the second antenna interface 222, the first change-over switch 20 can implement connection or disconnection between the output line 41 and the second signal line 21, and therefore, the first change-over switch 20 can implement connection or disconnection between the feeder connecting the second antenna interface 222 and the corresponding second signal line 21; or the feeder connecting the first antenna interface 111 may be directly connected with the first signal line 11 through the first antenna interface 111, the second change-over switch 10 can implement connection and disconnection between the first signal line 11 and the corresponding third signal line 31, and therefore, the first change-over switch 10 can implement connection and disconnection between the feeder connecting the first antenna interface 111 and the corresponding third signal line 31), and therefore, change-over switches may be set in radio frequency connectors to facilitate connections with feeders. For example, in FIG. 8a, the first change-over switch 20 may be set in a second radio frequency connector 22, and the second change-over switch 10 may be set in a first radio frequency connector 12.

But it is not limited to this. In other embodiments of the present invention, change-over switches may also be set outside radio frequency connectors. For example, as shown in FIG. 8b, the first change-over switch 20 may be set outside the second radio frequency connector 22, and the output line 41 corresponding to the first change-over switch 20 may be led out from the second radio frequency connector 22, and later the led-out output line 41 is connected to the third port 213 of the first change-over switch 20. Furthermore, the second change-over switch 10 may be set outside the first radio frequency connector 12, and the first signal line 11 corresponding to the second change-over switch 10 may be led out from the first radio frequency connector 12, and later the led-out first signal line 11 is connected to the fourth port 101 of the second change-over switch 10.

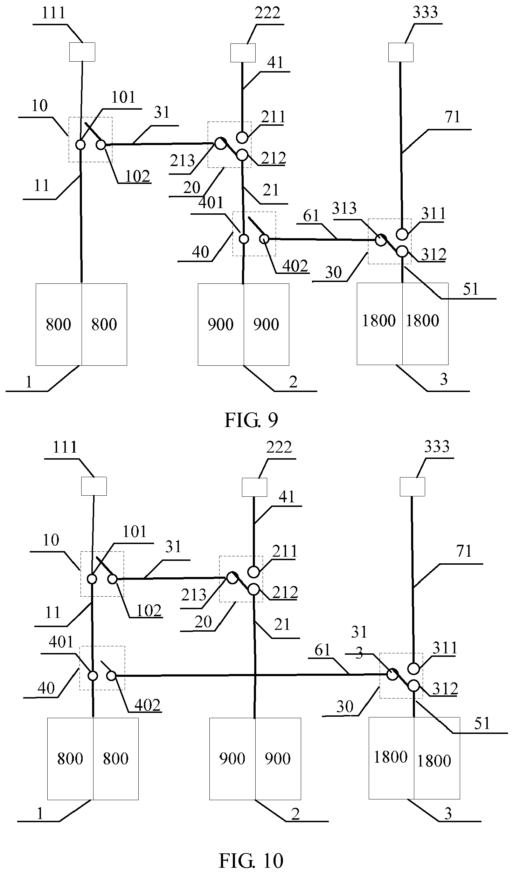

The embodiment as shown in the foregoing FIG. 3 to FIG. 8 illustrates the situation that the radio frequency module includes two frequency band sub-modules, and the following radio frequency module as shown in FIG. 9 illustrates the situation that the radio frequency module includes three frequency band sub-modules. In the radio frequency module as shown in FIG. 9, the parts the same as the radio frequency module that includes two frequency band sub-modules are represented as equivalent or similar parts or indicated by equivalent or similar signs and are described in brief, so as to make the present invention clearer and easier to understand. It should be understood that the radio frequency module may further include a plurality of frequency band sub-modules not limited to two and three.

In FIG. 9, the radio frequency module includes a first frequency band sub-module 1, a second frequency band sub-module 2, and a third frequency band sub-module 3; a first change-over switch 20, a second change-over switch 10, a third change-over switch 30, and a fourth change-over switch 40. The third change-over switch 30 is connected at the joint of a fourth signal line 51 and a fifth signal line 61, and has three ports, including a sixth port 311, a seventh port 312, and a eighth port 313, in which the sixth port 311 is connected with a first output line 71, the seventh port 312 is connected with the fourth signal line 51, and the eighth port 313 is connected with the fifth signal line 61. The fourth change-over switch 40 is connected at the joint of a second signal line 21 and the fifth signal line 61, and has two ports, including a ninth port 401 and a tenth port 402, in which the ninth port 401 is connected with the second signal line 21 and the tenth port 402 is connected with the fifth signal line 61. And the third change-over switch 30 and the fourth change-over switch 40 may be linked switches. When the third change-over switch 30 has the seventh port 312 connected to the sixth port 311, the fifth signal line 61 is disconnected from the fourth signal line 51 and the fourth signal line 51 is connected with the first output line 71. In this case, the fourth change-over switch 40 may be linked to the third change-over switch 30 to disconnect the tenth port 402 from the ninth port 401, thereby disconnecting the fifth signal line 61 from the second signal line 21. When the third change-over switch 30 has the seventh port 312 connected to the eighth port 313, the fifth signal line 61 is connected with the fourth signal line 51 and the fourth signal line 51 is disconnected from the first output line 71, then the fourth change-over switch 40 may be linked to the third change-over switch to connect the tenth port 402 to the ninth port 401, thereby connecting the fifth signal line 61 with the second signal line 21.

When the third change-over switch 30 has the seventh port 312 connected to the sixth port 311, that is, the fourth signal line 51 is connected with the first output line 71, the fifth signal line 61 is disconnected from both the fourth signal line 51 and the second signal line 21. Then, if the first change-over switch 20 has the second port 212 changed over to the first port 211, the third signal line 31 is disconnected from both the first signal line 11 and the second signal line 21. In this case, there are at least three output situations: the first antenna interface 111 outputs the 800 MHz frequency band radio frequency signal, the second antenna interface 222 has no output, and the third antenna interface 333 outputs the 1800 MHz frequency band radio frequency signal; or the first antenna interface 111 has no output, the second antenna interface 222 outputs the 900 MHz frequency band radio frequency signal, and the third antenna interface 333 outputs the 1800 MHz frequency band radio frequency signal; or the first antenna interface 111 outputs the 800 MHz frequency band radio frequency signal, the second antenna interface 222 outputs the 900 MHz frequency band radio frequency signal, and the third antenna interface 333 outputs the 1800 MHz frequency band radio frequency signal. If the first change-over switch 20 has the second port 212 changed over to the third port 213, both ends of the third signal line 31 are respectively connected with the first signal line 11 and the second signal line 21. Then, the first antenna interface 111 outputs the combined signal of the 800 MHz and 900 MHz frequency band radio frequency signals, the second antenna interface 222 has no output, and the third antenna interface 333 outputs the 1800 MHz frequency band radio frequency signal.

When the third change-over switch 30 has the seventh port 312 connected to the eighth port 313, that is, when the fourth signal line 51 is connected with the fifth signal line 61, the fifth signal line 61 is also connected with the second line 21. In this case, if the first change-over switch 20 has the second port 212 changed over to the first port 211, the third signal line 31 is disconnected from both the first signal line 11 and the second signal line 21. In this case, there are three output situations: the first antenna interface 111 outputs the 800 MHz frequency band radio frequency signal, and the second antenna interface 222 and the third antenna interface 333 have no output; or the second antenna interface 222 outputs the combined signal of the 900 MHz frequency band and 1800 MHz frequency band radio frequency signals, and the first antenna interface 111 and the third antenna interface 333 have no output; or the first antenna interface 111 outputs the 800 MHz frequency band radio frequency signal, the second antenna interface 222 outputs the combined signal of the 900 MHz frequency band and 1800 MHz frequency band radio frequency signals, and the third antenna interface 333 has no output. If the first change-over switch 20 has the second port 212 changed over to the third port 213, both ends of the third signal line 31 are respectively connected with the first signal line 11 and the second signal line 21, then the combined signals of the three frequency bands 800 MHz, 900 MHz, and 1800 MHz are combined and output from the first antenna interface 111.

FIG. 10 shows a transformed solution of the radio frequency module as shown in FIG. 9. In FIG. 10, the fifth signal line 61 may be connected with the first signal line 11, not connected with the second signal line 21. In this case, the antenna interface mode of the radio frequency module in FIG. 10 is similar to the antenna interface mode of the radio frequency module in FIG. 9, and may be deduced from the antenna interface mode described in the embodiment as shown in FIG. 9. Furthermore, in the transformed solution as shown in FIG. 10, a change-over switch (not shown in the figure, the interface and function of the change-over switch may be determined according to the embodiment as shown in FIG. 9) having two ports may also be arranged between the fifth signal line 61 and the second signal line 21, capable of implementing a radio frequency signal receiving and sending mode of receiving and sending the 800 MHz radio frequency signal from the first antenna interface 111 and receiving and sending the combined signal of the 900 MHz radio frequency signal and the 1800 MHz radio frequency signal from the second antenna interface 222 by the cooperation function of the change-over switch with the third change-over switch 30 and fourth change-over switch 40.

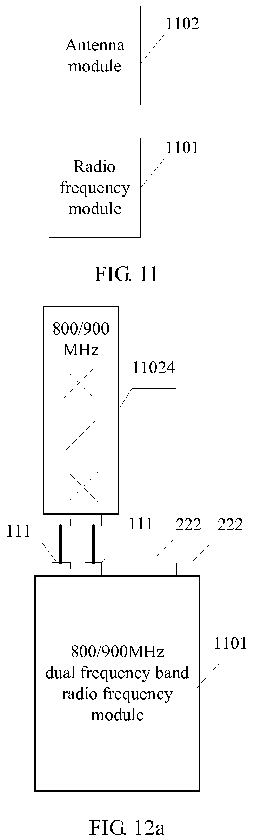

As shown in FIG. 11, an embodiment of the present invention further provides a device for receiving and sending a radio frequency signal, including:
a radio frequency module 1101, as shown in FIG. 3, where the radio frequency module 1101 includes a first frequency band sub-module 1 and a second frequency band sub-module 2. The first frequency band sub-module 1 is connected with a first signal line 11, and an end of the first signal line 11 is provided with a first antenna interface 111. The second frequency band sub-module 2 is connected with a second signal line 21, and a third signal line 31 is connected between the first signal line 11 and the second signal line 21. A first change-over switch 20 is arranged on the joint of the second signal line 21 and the third signal line 31. The first change-over switch 20 is provided with a first port 211, a second port 212, and a third port 213. The first port 211 is connected with an output line 41, and the end of the output line 41 is provided with a second antenna interface 222. The second port 212 is connected with the second signal line 21, and the third port 213 is connected with the third signal line 31. The second port 212 can change over between the connections with the first port 211 and the third port 213; and
an antenna module 1102, where the antenna module 1102 is connected to the radio frequency module 1101 through the first antenna interface 111 and/or the second antenna interface 222.

In the device for receiving and sending a radio frequency signal provided by the embodiment of the present invention, because the first change-over switch 20 has the first port 211 connected with the output line 41, the second port 212 connected with the second signal line 21, and the third port 213 connected with the third signal line 31, and the second port 212 can change over between the connections with the first port 211 and the third port 213, when the second port 212 is connected to the third port 213, the second signal line 21 may communicate with the third signal line 31, and the second signal line 21 is disconnected from the output line 41. In this case, both ends of the third signal line 31 are respectively connected with the first signal line 11 and the second signal line 21, capable of implementing combination of the radio frequency signal of the first frequency band sub-module 1 and the radio frequency signal of the second frequency band sub-module 2, and output of the combined signal from the first antenna interface 111; the antenna module 1102 is connected to the first frequency band sub-module 1 and the second frequency band sub-module 2 through the first antenna interface 111, implementing receiving and sending the combined signal of the radio frequency signal of the first frequency band sub-module 1 and the radio frequency signal of the second frequency band sub-module 2.

When the second port 212 changes over to the first port 211, the second signal line 21 may communicate with the output line 41, and the third signal line 31 is disconnected from the second signal line 21. This implements that only the radio frequency signal of the first frequency band sub-module 1 is output from the first antenna interface 111, or only the radio frequency signal of the second frequency band sub-module 2 is output from the second antenna interface 222, or the radio frequency signal of the first frequency band sub-module 1 is output from the first antenna interface 111 and the radio frequency signal of the second frequency band sub-module 2 is output from the second antenna interface 222. In this case, the antenna module 1102 can be connected to the first frequency band sub-module 1 through the first antenna interface 111 to implement receiving and sending the radio frequency signal of the first frequency band sub-module 1; the antenna module 1102 can also be connected to the second frequency band sub-module 2 through the second antenna interface 222 to implement receiving and sending the radio frequency signal of the second frequency band sub-module 2; when the antenna module 1102 is connected to the first frequency band sub-module 1 and the second frequency band sub-module 2 respectively through the first antenna interface 111 and the second antenna interface 222, the antenna module 1102 can implement concurrently receiving and sending the radio frequency signal of the first frequency band sub-module 1 and the radio frequency signal of the second frequency band sub-module 2. Hence, the device for receiving and sending a radio frequency signal can flexibly change the mode of receiving and sending a radio frequency signal.

It should be noted that the structure and function of the radio frequency module used in the embodiment of the device for receiving and sending a radio frequency signal are the same with the structure and function of the radio frequency module in the embodiment as shown in the foregoing FIG. 3 to FIG. 10, and are not described herein again. The following uses a device for receiving and sending a radio frequency signal of an 800/900 MHz dual frequency band radio frequency module as an example to illustrate the differences of this embodiment.

As shown in FIG. 11 and FIG. 12a to FIG. 12d with reference to FIG. 5, the radio frequency module 1101, in the device for receiving and sending a radio frequency signal, includes two 800 MHz frequency band sub-modules 1 and two 900 MHz frequency band sub-modules 2; the antenna module 1102 may include at least one of a first antenna module 11021, a second antenna module 11022, a third antenna module 11023, and a frequency-combined antenna module 11024. The radio frequency module 1101 has four antenna interfaces in total, including two first antenna interfaces 111 corresponding to the 800 MHz frequency band sub-module 1 and two second antenna interfaces 222 corresponding to the 900 MHz frequency band sub-module 2. For convenience of illustration, the first and second antenna interfaces are set to the first antenna interfaces 111, and the third and fourth antenna interfaces are set to the second antenna interfaces 222 by a sequence from left to right. The first antenna module 11021 is the antenna module for receiving the 800 MHz frequency band radio frequency signal, the second antenna module 11022 is the antenna module for receiving the 900 MHz frequency band radio frequency signal, the third antenna module 11023 is the antenna module for receiving the 800 MHz frequency band radio frequency signal and the 900 MHz frequency band radio frequency signal separately, and the frequency-combined antenna module 11024 is the antenna module for receiving the combined signal of the 800 MHz frequency band radio frequency signal and the 900 MHz frequency band radio frequency signal. In the device for receiving and sending a radio frequency signal in the embodiment, the two first antenna interfaces 111 of the radio frequency module are multiplexing interfaces, that is, the second port 212 of the first change-over switch 20 may change over between the first port 211 and the third port 213, so as to receive and send either the 800 MHz frequency band radio frequency signal or the combined signal of the 800 MHz frequency band radio frequency signal and the 900 MHz frequency band radio frequency signal.

When the second port 212 is connected to the third port 213, the second signal line 21 communicates with the third signal line 31, and the second signal line 21 is disconnected from the output line 41. In this case, both ends of the third signal line 31 are respectively connected with the first signal line 11 and the second signal line 21. The 800 MHz frequency band radio frequency signal and the 900 MHz frequency band radio frequency signal are combined and output from the first antenna interface 111. As shown in FIG. 12a, in this case, only the two first antenna interfaces 111 function, and the two second antenna interfaces 222 do not function. Hence, through the two first antenna interfaces 111 and again through feeders, the combined signal of the 800 MHz frequency band radio frequency signal and the 900 MHz frequency band radio frequency signal may be output to the frequency-combined antenna module 11024.

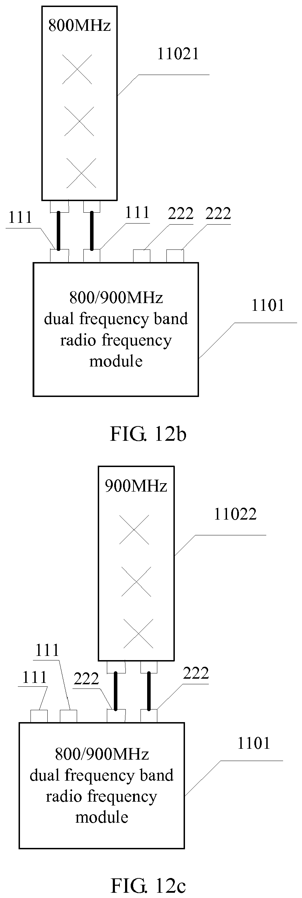

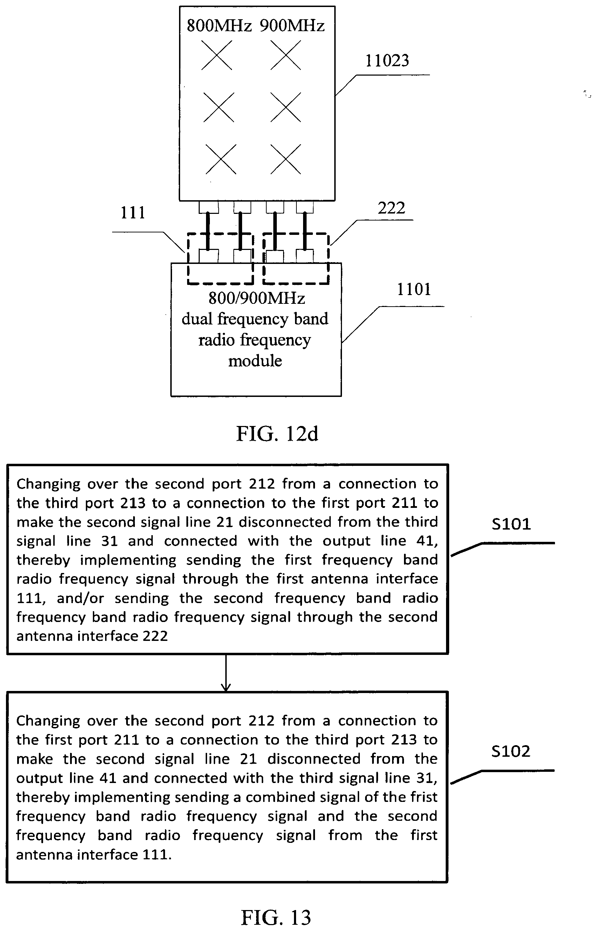

When the first change-over switch 20 has the second port 212 connected to the first port 211, the second signal line 21 is disconnected from the third signal line 31 and is connected with the output line 41. In this case, there are three signal output modes, respectively being that only the 800 MHz frequency band radio frequency signal is output from the first antenna interface 111 (the second antenna interface 222 has no output in this case), only the 900 MHz frequency band radio frequency signal is output from the second antenna interface 222 (the first antenna interface 111 has no output in this case), or the 800 MHz frequency band radio frequency signal and the 900 MHz frequency band radio frequency signal are respectively output from the first antenna interface 111 and the second antenna interface 222. In this case, all the two first antenna interfaces 111 and the two second antenna interfaces 222 may function. As shown in FIG. 12b, as regards the situation only requiring the 800 MHz frequency band radio frequency signal, the two first antenna interfaces 111 are connected to the first antenna module 11021 through feeders. Similarly, as shown in FIG. 12c, as regards the situation only requiring the 900MHz frequency band radio frequency signal, the two second antenna interfaces 222 are connected to the second antenna module 11022 through feeders. As shown in FIG. 12d, when the four antenna interfaces (including the two first antenna interfaces 111 and the two second antenna interfaces 222) on the radio frequency module are respectively connected to the third antenna module 11023 through feeders, outputting the 800 MHz frequency band and the 900 MHz frequency band radio frequency signals from four ports can be implemented accordingly. Based on the above, when the first change-over switch 20 has the second port 212 connected to the first port 211, the first antenna interface 111 is connected to the first antenna module 11021, or connected to the third antenna module 11023, or is empty; the second antenna interface 222 is connected to the second antenna module 11022, or connected to the third antenna module 11023, or is empty.

It should be noted that the "empty" means logically empty, that is, no signal is received or sent. For example, "empty" may be achieved by disconnecting the first antenna interface 111 and the second antenna interface 222 from feeders, or connecting the first antenna interface 111 and the second antenna interface 222 to insulated feeders.

As shown in FIG. 13, an embodiment of the present invention further provides a method for receiving and sending a radio frequency signal, where the foregoing radio frequency module is utilized to receive or send the radio frequency signal. The method includes:
S101, changing over a second port 212 from a connection to a third port 213 to a connection to a first port 211 to make a second signal line 21 disconnected from a third signal line 31 and connected to an output line 41, thereby implementing sending a first frequency band radio frequency signal through a first antenna interface 111, and/or sending a second frequency band radio frequency signal through a second antenna interface 222; or
S102, changing over a second port 212 from a connection to the first port 211 to a connection to the third port 213 to make the second signal line 21 disconnected from the output line 41 and connected to the third signal line 31, thereby implementing sending a combined signal of the first frequency band radio frequency signal and the second frequency band radio frequency signal from the first antenna interface 111.

The method for receiving and sending a radio frequency signal provide by the embodiment of the present invention can make the second port 212 change over between the first port 211 and the third port 213 to be connected to the first port 211 or the third port 213. Hence, when the second port 212 is connected to the third port 213, the second signal line 21 communicates with the third signal line 31, and the second signal line 21 is disconnected from the output line 41. In this case, both ends of the third signal line 31 are respectively connected with the first signal line 11 and the second signal line 21, capable of implementing combination of the radio frequency signal of the first frequency band sub-module 1 and the radio frequency signal of the second frequency band sub-module 2, and output of the combined signal from the first antenna interface 111. When the second port 212 changes over to the first port 211, the second signal line 21 may communicate with the output line 41, and the third signal line 31 is disconnected from the second signal line 21. This implements that only the radio frequency signal of the first frequency band sub-module 1 is output from the first antenna interface 111, or only the radio frequency signal of the second frequency band sub-module 2 is output from the second antenna interface 222, or the radio frequency signal of the first frequency band sub-module 1 is output from the first antenna interface 111 and the radio frequency signal of the second frequency band sub-module 2 is output from the second antenna interface 222. Hence, the method for receiving and sending a radio frequency signal can be changed flexibly through change-over of the first change-over switch 20.

In step S101, when the second port 212 is changed over from the third port 213 to the first port 211, meanwhile the third signal line 31 may be disconnected from the first signal line, implementing sending the first frequency band radio frequency signal through the first antenna interface 111, and/or sending the second frequency band radio frequency signal through the second antenna interface 222;

Or correspondingly in step S102, when the second port 212 is changed over from the first port 211 to the third port 213, the third signal line 31 communicates with the first signal line 11, implementing sending the combined signal of the first frequency band radio frequency signal and the second frequency band radio frequency signal through the first antenna interface 111.

An embodiment of the present invention further provides a base station system, where the base station includes the foregoing device for receiving and sending a radio frequency signal. In addition, the radio frequency module and the method for receiving and sending a radio frequency signal provided by the embodiments of the present invention may also be used in the base station system.

It should be understood that any radio frequency module, device and method for receiving and sending a radio frequency signal provided by the embodiments of the present invention may be used in, but not limited to the field of communications technologies. For example, the radio frequency module or the device for receiving and sending a radio frequency signal may be located in a base station system or a radar system for receiving and sending a radio frequency signal as well as supporting change of the mode of receiving and sending a radio frequency signal. The base station system may function as an integrated base station, a distributed base station, or a remote base station, which is not limited by embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A radio frequency module, comprising a first frequency band sub-module (1) and a second frequency band sub-module (2), wherein the first frequency band sub-module (1) is connected with a first signal line (11), and an end of the first signal line (11) is provided with a first antenna interface (111), the second frequency band sub-module (2) is connected with a second signal line (21)
and a third signal line (31) is connected between the first signal line (11) and the second signal line (21);
and a first change-over switch (20) is arranged on the joint of the second signal line (21) and the third signal line (31), and the first change-over switch (20) is provided with a first port (211), a second port (212), and a third port (213), the first port (211) is connected with an output line (41), and the end of the output line (41) is provided with a second antenna interface (222), the second port (212) is connected to the second signal line (21), and the third port (213) is connected to the third signal line (31), the second port (212) is capable of being changed over between a connection to the first port (211) and a connection to the third port (213),
**characterized in that**
when the second port (212) is connected to the first port (211), the radio frequency module is configured to output only the radio frequency signal of the first frequency band sub-module from the first antenna interface (111), or to output only the radio frequency signal of the second frequency band sub-module (2) from the second antenna interface (222), or to output the radio frequency signal of the first frequency band sub-module (1) from the first antenna interface (111) and the radio frequency signal of the second frequency band sub-module (2) from the second antenna interface (222);
or
when the second port (212) is connected to the third port (213), the radio frequency module is configured to output a combined signal from the first antenna interface (111), wherein the combined signal is a combination of the radio frequency signal of the first frequency band sub-module (1) and the radio frequency signal of the second frequency band sub-module (2).

2. The radio frequency module according to claim 1, wherein a second change-over switch (10) is arranged on the joint of the first signal line (11) and the third signal line (31), and the second change-over switch (10) has one end connected with the first signal line (11) and the other end connected with the third signal line (31), the second change-over switch (10) and the first change-over switch (11) are linked switches; when the second port (212) is connected to the first port (211), the second change-over switch (10) is arranged to disconnect the third signal line (31) from the first signal line (11); when the second port (212) is connected to the third port (213), the second change-over switch (10) is arranged to connect the third signal line (31) with the first signal line (11).

3. The radio frequency module according to claim 1 or 2, wherein the length of the third signal line is an integral multiple of 1/2 wavelength of the radio frequency signal of the first frequency band sub-module (1).

4. The radio frequency module according to any one of claims 1 to 3, wherein the radio frequency module further comprises a third frequency band sub-module (3), the third frequency band sub-module (3) is connected with a fourth signal line (51), and a fifth signal line (61) is connected between the fourth signal line (51) and the second signal line (21);
a third change-over switch (30) is arranged on the joint of the fourth signal line (51) and the fifth signal line (61), and the third change-over switch (30) is provided with a sixth port (311), a seventh port (312), and an eighth port (313), wherein the sixth port (311) is connected with a first output line (71), and an end of the first output line (71) is provided with a third antenna interface (333), the seventh port (312) is connected with the fourth signal line (51), and the eighth port (313) is connected with the fifth signal line (61), and the seventh port (312) can change over between the connections with the sixth port (311) and the eighth port (313).

5. The radio frequency module according to any one of claims 1 to 3, wherein the radio frequency module further comprises a third frequency band sub-module (3), the third frequency band sub-module (3) is connected with a fourth signal line (51), and a fifth signal line (61) is connected between the fourth signal line (51) and the first signal line (11);
a third change-over switch (30) is arranged on the joint of the fourth signal line (51) and the fifth signal line (61), and the third change-over switch (30) is provided with a sixth port (311), a seventh port (312), and an eighth port (315), the sixth port (311) is connected with a first output line (71), and an end of the first output line (71) is provided with a third antenna interface (33), the seventh port (312) is connected with the fourth signal line (51), and the eighth port (313) is connected with the fifth signal line (61), and the seventh port (312) can change over between the connections with the sixth port (311) and the eighth port (313).

6. A device for receiving and sending a radio frequency signal, comprising:
the radio frequency module (1101) according to any one of claims 1 to 5;
and an antenna module (1102), wherein the antenna module is connected to the radio frequency module through a first antenna interface (111) and/or a second antenna interface (222) in the radio frequency module.

7. The device for receiving and sending a radio frequency signal according to claim 6, wherein the antenna module (1102) comprises a first frequency band antenna module (11021) and a second frequency band antenna module (11022), and when the second port is connected to the first port, the first antenna interface is connected to the first frequency band antenna module (11021) or is empty, and the second antenna interface is connected to the second frequency band antenna module (11022) or is empty.

8. The device for receiving and sending a radio frequency signal according to claim 6, wherein the antenna module (1102) comprises a frequency-combined antenna module (11024) for receiving and sending the combined signal of a first frequency band radio frequency signal and a second frequency band radio frequency signal, and when the second port is connected to the third port, the first antenna interface is connected to the frequency-combined antenna module (11024).

9. A base station system, comprising the device for receiving and sending a radio frequency signal according to any one of claims 6 to 8.

10. A method for receiving and sending a radio frequency signal, wherein the radio frequency module according to any one of claims 1 to 3 is utilized to receive or send a radio frequency signal, the method comprises:
changing over the second port from the third port to the first port to make the second signal line disconnected from the third signal line and connected with the output line, implementing sending a first frequency band radio frequency signal through the first antenna interface, and/or sending a second frequency band radio frequency signal through the second antenna interface; or
changing over the second port from the first port to the third port to make the second signal line disconnected from the output line and connected to the third signal line, implementing sending a combined signal of the first frequency band radio frequency signal and the second frequency band radio frequency signal through the first antenna interface.

## Patentansprüche

1. Radiofrequenzmodul mit einem ersten Frequenzband-Untermodul (1) und einem zweiten Frequenzband-Untermodul (2), wobei das erste Frequenzband-Untermodul (1) mit einer ersten Signalleitung (11) verbunden ist, und ein Ende der ersten Signalleitung (11) mit einer ersten Antennenschnittstelle (111) bereitgestellt wird, das zweite Frequenzband-Untermodul (2) mit einer zweiten Signalleitung (21) verbunden ist
und eine dritte Signalleitung (31) zwischen die erste Signalleitung (11) und die zweite Signalleitung (21) geschaltet ist;
und ein erster Umschalter (20) an der Verbindungsstelle der zweiten Signalleitung (21) und der dritten Signalleitung (31) angeordnet ist, und der erste Umschalter (20) mit einem ersten Anschluss (211), einem zweiten Anschluss (212) und einem dritten Anschluss (213) bereitgestellt wird, der erste Anschluss (211) mit einer Ausgangsleitung (41) verbunden ist, und das Ende der Ausgangsleitung (41) mit einer zweiten Antennenschnittstelle (222) bereitgestellt wird, der zweite Anschluss (212) mit der zweiten Signalleitung (21) verbunden ist, und der dritte Anschluss (213) mit der dritten Signalleitung (31) verbunden ist, der zweite Anschluss (212) fähig ist, zwischen einer Verbindung mit dem ersten Anschluss (211) und einer Verbindung mit dem dritten Anschluss (213) umgeschaltet zu werden,
**dadurch gekennzeichnet, dass**
wenn der zweite Anschluss (212) mit dem ersten Anschluss (211) verbunden ist, das Radiofrequenzmodul konfiguriert ist, um nur das Funkradiofrequenzsignal des ersten Frequenzband-Untermoduls von der ersten Antennenschnittstelle (111) auszugeben, oder nur das Funkradiofrequenzsignal des zweiten Frequenzband-Untermoduls (2) von der zweiten Antennenschnittstelle (222) auszugeben, oder das Funkradiofrequenzsignal des ersten Frequenzband-Untermoduls (1) von der ersten Antennenschnittstelle (111) und das Funkradiofrequenzsignal des zweiten Frequenzband-Untermoduls (2) von der zweiten Antennenschnittstelle (222) auszugeben; oder
wenn der zweite Anschluss (212) mit dem dritten Anschluss (213) verbunden ist, das Radiofrequenzmodul konfiguriert ist, um ein kombiniertes Signal von der ersten Antennenschnittstelle (111) auszugeben, wobei das kombinierte Signal eine Kombination des Funkradiofrequenzsignals des ersten Frequenzband-Untermoduls (1) und des Funkradiofrequenzsignals des zweiten Frequenzband-Untermoduls (2) ist.

2. Radiofrequenzmodul nach Anspruch 1, wobei ein zweiter Umschalter (10) an der Verbindungsstelle der ersten Signalleitung (11) und der dritten Signalleitung (31) angeordnet ist, und der zweite Umschalter (10) ein Ende aufweist, das mit der ersten Signalleitung (11) verbunden ist, und das andere Ende mit der dritten Signalleitung (31) verbunden ist, der zweite Umschalter (10) und der erste Umschalter (11) verbundene Schalter sind; wenn der zweite Anschluss (212) mit dem ersten Anschluss (211) verbunden ist, der zweite Umschalter (10) angeordnet ist, um die dritte Signalleitung (31) von der ersten Signalleitung (11) zu trennen; wenn der zweite Anschluss (212) mit dem dritten Anschluss (213) verbunden ist, der zweite Umschalter (10) angeordnet ist, um die dritte Signalleitung (31) mit der ersten Signalleitung (11) zu verbinden.

3. Radiofrequenzmodul nach Anspruch 1 oder 2, wobei die Länge der dritten Signalleitung ein ganzzahliges Vielfaches der 1/2 Wellenlänge des Funkradiofrequenzsignals des ersten Frequenzband-Untermoduls (1) ist.

4. Radiofrequenzmodul nach einem der Ansprüche 1 bis 3, wobei das Radiofrequenzmodul ferner ein drittes Frequenzband-Untermodul (3) umfasst, das dritte Frequenzband-Untermodul (3) mit einer vierten Signalleitung (51) verbunden ist, und eine fünfte Signalleitung (61) zwischen die vierte Signalleitung (51) und die zweite Signalleitung (21) geschaltet ist;
ein dritter Umschalter (30) an der Verbindungsstelle der vierten Signalleitung (51) und der fünften Signalleitung (61) angeordnet ist, und der dritte Umschalter (30) mit einem sechsten Anschluss (311), einem siebten Anschluss (312) und einem achten Anschluss (313) bereitgestellt wird, wobei der sechste Anschluss (311) mit einer ersten Ausgangsleitung (71) verbunden ist, und ein Ende der ersten Ausgangsleitung (71) mit einer dritten Antennenschnittstelle (333) bereitgestellt wird, der siebte Anschluss (312) mit der vierten Signalleitung (51) verbunden ist, und der achte Anschluss (313) mit der fünften Signalleitung (61) verbunden ist, und der siebte Anschluss (312) zwischen den Verbindungen mit dem sechsten Anschluss (311) und dem achten Anschluss (313) umgeschaltet werden kann.

5. Radiofrequenzmodul nach einem der Ansprüche 1 bis 3, wobei das Radiofrequenzmodul ferner ein drittes Frequenzband-Untermodul (3) umfasst, das dritte Frequenzband-Untermodul (3) mit einer vierten Signalleitung (51) verbunden ist, und eine fünfte Signalleitung (61) zwischen die vierte Signalleitung (51) und die erste Signalleitung (11) geschaltet ist;
ein dritter Umschalter (30) an der Verbindungsstelle der vierten Signalleitung (51) und der fünften Signalleitung (61) angeordnet ist, und der dritte Umschalter (30) mit einem sechsten Anschluss (311), einem siebten Anschluss (312) und einem achten Anschluss (315) bereitgestellt wird, der sechste Anschluss (311) mit einer ersten Ausgangsleitung (71) verbunden ist, und ein Ende der ersten Ausgangsleitung (71) mit einer dritten Antennenschnittstelle (33) bereitgestellt wird, der siebte Anschluss (312) mit der vierten Signalleitung (51) verbunden ist, und der achte Anschluss (313) mit der fünften Signalleitung (61) verbunden ist, und der siebte Anschluss (312) zwischen den Verbindungen mit dem sechsten Anschluss (311) und dem achten Anschluss (313) umgeschaltet werden kann.

6. Vorrichtung zum Empfangen und Senden eines Funkradiofrequenzsignals, umfassend:
das Radiofrequenzmodul (1101) nach einem der Ansprüche 1 bis 5;
und ein Antennenmodul (1102), wobei das Antennenmodul mit dem Radiofrequenzmodul über eine erste Antennenschnittstelle (111) und/oder eine zweite Antennenschnittstelle (222) in dem Radiofrequenzmodul verbunden ist.

7. Vorrichtung zum Empfangen und Senden eines Funkradiofrequenzsignals nach Anspruch 6, wobei das Antennenmodul (1102) ein erstes Frequenzband-Antennenmodul (11021) und ein zweites Frequenzband-Antennenmodul (11022) umfasst, und wenn der zweite Anschluss mit dem ersten Anschluss verbunden ist, die erste Antennenschnittstelle mit dem ersten Frequenzband-Antennenmodul (11021) verbunden ist oder leer ist, und die zweite Antennenschnittstelle mit dem zweiten Frequenzband-Antennenmodul (11022) verbunden ist oder leer ist.

8. Vorrichtung zum Empfangen und Senden eines Funkradiofrequenzsignals nach Anspruch 6, wobei das Antennenmodul (1102) ein frequenzkombiniertes Antennenmodul (11024) zum Empfangen und Senden des kombinierten Signals eines ersten Frequenzband-Funkradiofrequenzsignals und eines zweiten Frequenzband-Funkradiofrequenzsignals umfasst, und wenn der zweite Anschluss mit dem dritten Anschluss verbunden ist, die erste Antennenschnittstelle mit dem frequenzkombinierten Antennenmodul (11024) verbunden ist.

9. Basisstationssystem, umfassend die Vorrichtung zum Empfangen und Senden eines Funkradiofrequenzsignals nach einem der Ansprüche 6 bis 8.

10. Verfahren zum Empfangen und Senden eines Funkradiofrequenzsignals, wobei das Radiofrequenzmodul nach einem der Ansprüche 1 bis 3 zum Empfangen oder Senden eines Funkradiofrequenzsignals verwendet wird, wobei das Verfahren umfasst:
Umschalten des zweiten Anschlusses von dem dritten Anschluss zu dem ersten Anschluss, um die zweite Signalleitung von der dritten Signalleitung zu trennen und mit der Ausgangsleitung zu verbinden, wobei das Senden eines ersten Frequenzband-Funkradiofrequenzsignals durch die erste Antennenschnittstelle implementiert wird, und/oder Senden eines zweiten Frequenzband-Funkradiofrequenzsignals durch die zweite Antennenschnittstelle; oder
Umschalten des zweiten Anschlusses von dem ersten Anschluss zu dem dritten Anschluss, um die zweite Signalleitung von der Ausgangsleitung zu trennen und mit der dritten Signalleitung zu verbinden, wobei das Senden eines kombinierten Signals des ersten Frequenzband-Funkradiofrequenzsignals und des zweiten Frequenzband-Funkradiofrequenzsignals durch die erste Antennenschnittstelle implementiert wird.

## Revendications

1. Module radiofréquence, comprenant un premier sous-module de bande de fréquences (1) et un troisième sous-module de bande de fréquences (2), dans lequel le premier sous-module de bande de fréquences (1) est connecté à une première ligne de signal (11), et une extrémité de la première ligne de signal (11) est dotée d'une première interface d'antenne (111), le troisième sous-module de bande de fréquences (2) est connecté à une deuxième ligne de signal (21) et une troisième ligne de signal (31) est connectée entre la première ligne de signal (11) et la deuxième ligne de signal (21) ; et un premier commutateur de permutation (20) est agencé sur la jonction de la deuxième ligne de signal (21) et de la troisième ligne de signal (31), et le premier commutateur de permutation (20) est doté d'un premier port (211), d'un deuxième port (212), et d'un troisième port (213), le premier port (211) est connecté à une ligne de sortie (41), et l'extrémité de la ligne de sortie (41) est dotée d'une deuxième interface d'antenne (222), le deuxième port (212) est connecté à la deuxième ligne de signal (21), et le troisième port (213) est connecté à la troisième ligne de signal (31), le deuxième port (212) pouvant être permuté entre une connexion au premier port (211) et une connexion au troisième port (213),
**caractérisé en ce que**
quand le deuxième port (212) est connecté au premier port (211), le module radiofréquence est configuré pour produire uniquement en sortie le signal radiofréquence du premier sous-module de bande de fréquences depuis la première interface d'antenne (111), ou pour produire uniquement en sortie le signal radiofréquence du troisième sous-module de bande de fréquences (2) depuis la deuxième interface d'antenne (222), ou pour produire en sortie le signal radiofréquence du premier sous-module de bande de fréquences (1) depuis la première interface d'antenne (111) et le signal radiofréquence du troisième sous-module de bande de fréquences (2) depuis la deuxième interface d'antenne (222) ;
ou
quand le deuxième port (212) est connecté au troisième port (213), le module radiofréquence est configuré pour produire en sortie un signal combiné depuis la première interface d'antenne (111), dans lequel le signal combiné est une combinaison du signal radiofréquence du premier sous-module de bande de fréquences (1) et du signal radiofréquence du troisième sous-module de bande de fréquences (2).

2. Module radiofréquence selon la revendication 1, dans lequel un deuxième commutateur de permutation (10) est agencé sur la jonction de la première ligne de signal (11) et de la troisième ligne de signal (31), et le deuxième commutateur de permutation (10) a une extrémité connectée à la première ligne de signal (11) et l'autre extrémité connectée à la troisième ligne de signal (31), le deuxième commutateur de permutation (10) et le premier commutateur de permutation (11) sont des commutateurs liés ; quand le deuxième port (212) est connecté au premier port (211), le deuxième commutateur de permutation (10) est agencé pour déconnecter la troisième ligne de signal (31) de la première ligne de signal (11) ; quand le deuxième port (212) est connecté au troisième port (213), le deuxième commutateur de permutation (10) est agencé pour connecter la troisième ligne de signal (31) à la première ligne de signal (11).

3. Module radiofréquence selon la revendication 1 ou 2, dans lequel la longueur de la troisième ligne de signal est un multiple entier d'une demi-longueur d'onde du signal radiofréquence du premier sous-module de bande de fréquences (1).

4. Module radiofréquence selon l'une quelconque des revendications 1 à 3, le module radiofréquence comprenant en outre un troisième sous-module de bande de fréquences (3), le troisième sous-module de bande de fréquences (3) étant connecté à une quatrième ligne de signal (51), et une cinquième ligne de signal (61) est connectée entre la quatrième ligne de signal (51) et la deuxième ligne de signal (21) ; un troisième commutateur de permutation (30) est agencé sur la jonction de la quatrième ligne de signal (51) et de la cinquième ligne de signal (61), et le troisième commutateur de permutation (30) est doté d'un sixième port (311), d'un septième port (312), et d'un huitième port (313), dans lequel le sixième port (311) est connecté à une première ligne de sortie (71), et une extrémité de la première ligne de sortie (71) est dotée d'une troisième interface d'antenne (333), le septième port (312) est connecté à la quatrième ligne de signal (51), et le huitième port (313) est connecté à la cinquième ligne de signal (61), et le septième port (312) pouvant être permuté entre les connexions avec le sixième port (311) et le huitième port (313).

5. Module radiofréquence selon l'une quelconque des revendications 1 à 3, le module radiofréquence comprenant en outre un troisième sous-module de bande de fréquences (3), le troisième sous-module de bande de fréquences (3) étant connecté à une quatrième ligne de signal (51), et une cinquième ligne de signal (61) est connectée entre la quatrième ligne de signal (51) et la première ligne de signal (11) ; un troisième commutateur de permutation (30) est agencé sur la jonction de la quatrième ligne de signal (51) et de la cinquième ligne de signal (61), et le troisième commutateur de permutation (30) est doté d'un sixième port (311), d'un septième port (312), et d'un huitième port (315), le sixième port (311) est connecté à une première ligne de sortie (71), et une extrémité de la première ligne de sortie (71) est dotée d'une troisième interface d'antenne (33), le septième port (312) est connecté à la quatrième ligne de signal (51), et le huitième port (313) est connecté à la cinquième ligne de signal (61), et le septième port (312) pouvant être permuté entre les connexions avec le sixième port (311) et le huitième port (313).

6. Dispositif de réception et d'envoi d'un signal radiofréquence, comprenant :
le module radiofréquence (1101) selon l'une quelconque des revendications 1 à 5 ;
et un module d'antenne (1102), dans lequel le module d'antenne est connecté au module radiofréquence par le biais d'une première interface d'antenne (111) et/ou d'une deuxième interface d'antenne (222) dans le module radiofréquence.

7. Dispositif de réception et d'envoi d'un signal radiofréquence selon la revendication 6, dans lequel le module d'antenne (1102) comprend un premier sous-module de bande de fréquences (11021) et un deuxième sous-module de bande de fréquences (11022), et quand le deuxième port est connecté au premier port, la première interface d'antenne est connectée au premier sous-module de bande de fréquences (11021) ou est vide, et la deuxième interface d'antenne est connectée au deuxième sous-module de bande de fréquences (11022) ou est vide.

8. Dispositif de réception et d'envoi d'un signal radiofréquence selon la revendication 6, dans lequel le module d'antenne (1102) comprend un module d'antenne à fréquences combinées (11024) destiné à recevoir et à envoyer le signal combiné d'un signal radiofréquence d'une première bande de fréquences et un signal radiofréquence d'une seconde bande de fréquences, et quand le deuxième port est connecté au troisième port, la première interface d'antenne est connectée au module d'antenne à fréquences combinées (11024).

9. Système de station de base, comprenant le dispositif de réception et d'envoi d'un signal radiofréquence selon l'une quelconque des revendications 6 à 8.

10. Procédé de réception et d'envoi d'un signal radiofréquence, dans lequel le module radiofréquence selon l'une quelconque des revendications 1 à 3 est utilisé pour recevoir ou envoyer un signal radiofréquence, le procédé comprenant :
la permutation du deuxième port du troisième port au premier port pour déconnecter la deuxième ligne de signal de la troisième ligne de signal et la connecter à la ligne de sortie, la mise en oeuvre d'un envoi d'un signal radiofréquence d'une première bande de fréquences par le biais de la première interface d'antenne, et/ou l'envoi d'un signal radiofréquence d'une seconde bande de fréquences par le biais de la deuxième interface d'antenne ; ou
la permutation du deuxième port du premier port au troisième port pour déconnecter la deuxième ligne de signal de la ligne de sortie et la connecter à la troisième ligne de signal, la mise en oeuvre d'un envoi d'un signal combiné du signal radiofréquence d'une première bande de fréquences et du signal radiofréquence d'une seconde bande de fréquences par le biais de la première interface d'antenne.
